# EUROPÄISCHE PATENTANMELDUNG

(11) **EP 4 806 597 A1**
(43) Veröffentlichungstag der Anmeldung: **16.09.2026**
(21) Anmeldenummer: 25162772.5
(22) Anmeldetag: 10.03.2025
(51) Int. Cl.: B25J 9/16, G05B 19/4061, F16P 3/14

(54) **VERFAHREN ZUR STEUERUNG EINER PRODUKTIONSMASCHINE SOWIE FERTIGUNGSANLAGE**

(71) Anmelder: tofmotion UG (haftungsbeschränkt), 78048 Villingen-Schwenningen (DE)
(72) Erfinder: Hranitzky, Robert, 2540 Bad Vöslau (AT); Brugger, Peter, 6800 Feldkirch (AT); Neufeld, Christian, 4203 Altenberg bei Linz (AT)
(74) Vertreter: Mzb PartmbB

(57) **Zusammenfassung**

Die Erfindung betrifft ein Verfahren (1000) zur Steuerung einer Produktionsmaschine (12), insbesondere eines Industrieroboters, wobei mit einer Sicherheitskamera (24) dreidimensionale Bilddaten einer Umgebung (26) der Produktionsmaschine (12) aufgenommen werden, wobei die Sicherheitskamera (24) die Bilddaten hinsichtlich des Vorhandenseins eines beweglichen Objekts, beispielsweise eines Körperteils (36), in einem Überwachungsbereich (28) der Umgebung (26) auswertet, wobei, wenn die Sicherheitskamera (24) anhand der Bilddaten in dem Überwachungsbereich (28) ein bewegliches Objekts (36) detektiert, die Sicherheitskamera (24) ein Signal an die Produktionsmaschine (12) sendet,
- wobei auf das Signal hin die Produktionsmaschine (12) ihren Bewegungsbereich (22) verändert, insbesondere einschränkt und / oder verlegt, und / oder die Bewegung der Produktionsmaschine (12) gestoppt wird. Weiter betrifft die Erfindung eine Fertigungsanlage (10). Das Verfahren (1000) ermöglicht einen besonders effizienten Betrieb der Fertigungsanlage (10) durch Minimierung notwendiger Produktionsunterbrechungen der Produktionsmaschine (12).

## Beschreibung

Die vorliegende Erfindung betrifft ein Verfahren zur Steuerung einer Produktionsmaschine.

### Stand der Technik

Beispielsweise aus DE102013111570A1 ist eine Arbeitszellenanordnung mit einem geschützten Arbeitsbereich bekannt, der von einer Schutzeinrichtung mit mehreren Schutzelementen umgeben ist. Weiter ist eine Trenneinrichtung vorgesehen.

Aus der EP0192041A1 ist eine Kabine für Bearbeitungszentren bekannt, bei der nach Art von Schiebetüren ausgeführten Seitenwände mindestens einen Not-AusSchalter aufweisen.

### Offenbarung der Erfindung

Heutige Fertigungsstraßen umfassen häufig einzelne Fertigungszellen. In den Fertigungszellen befinden sich ein oder mehrere Produktionsmaschinen, beispielsweise ein Industrieroboter.

Heutige Fertigungsstraßen umfassen häufig einzelne Fertigungszellen. In den Fertigungszellen befinden sich ein oder mehrere Produktionsmaschinen, beispielsweise ein Industrieroboter.

Die Produktionsmaschinen verarbeiten an einem Materialwechselplatz abgelegtes Material und legen anschließend ein fertiges Werkstück wieder auf einen Materialwechselplatz zurück. Der Materialwechselplatz kann beispielsweise eine ortsfeste Ablagefläche umfassen.

Zur Vermeidung von Unfällen kann ein Bewegungsbereich der Produktionsmaschine, beispielsweise des Industrieroboters, mit Schutzelementen, beispielsweise Schutzgittern, eingezäunt sein. Insgesamt kann ein abgegrenzter Schutzraum ausgebildet sein.

Eine Person, beispielsweise ein Fabrikarbeiter, kann den Schutzraum üblicherweise nur betreten, wenn die Produktionsmaschine ausgeschaltet ist. Will sie beispielsweise neues Material zum Materialwechselplatz bringen, so muss aus Sicherheitsgründen die Produktionsmaschine angehalten werden, bis die Person den Schutzraum wieder verlassen hat. Ebenso kommt es zu Produktionsunterbrechungen, wenn die Person beispielsweise fertig verarbeitete Werkstücke aus dem Schutzraum herausnehmen möchte, beispielsweise um das Werkstück zu einer nachfolgenden Fertigungszelle zu bringen.

Ein weiterer Anwendungsfall betrifft beispielsweise Produktionsmaschinen, die sehr große Bewegungsräume aufweisen und / oder die mit hoher Energie oder Leistung Material trennen, pressen oder dergleichen, sodass sichergestellt werden muss, dass während der Arbeit der Produktionsmaschine kein Körperteil oder gar eine Person insgesamt in deren Nähe ist oder, falls doch, dass schnellstmöglich die Produktionsmaschine stoppt. Hier kommen beispielsweise sogenannte Zweihandschaltungen zum Einsatz. Bei diesen können beispielsweise zwei Taster vorgesehen sein, die eine Person mit ihren beiden Händen gleichzeitig drücken muss, um die Produktionsmaschine einzuschalten. Dadurch ist sichergestellt, dass sich im Moment, wenn die Produktionsmaschine arbeitet, die beiden Hände und damit letztlich auch die gesamte Person im Bereich der beiden Taster befinden. Sind die beiden Taster hinreichend weit von einer Arbeitsfläche der Produktionsmaschine entfernt, können dadurch Gefahren durch die Produktionsmaschine erheblich gesenkt oder sogar vermieden werden.

Allerdings ergeben sich auch hier häufige Produktionsunterbrechungen, beispielsweise, wenn die Person Material der Produktionsmaschine zuführen oder ein gefertigtes Werkstück von der Arbeitsfläche entnehmen möchte.

Solche Produktionsunterbrechungen senken die Gesamteffizienz der Produktionsmaschine und damit der Fertigungszelle oder der Fertigungsstraße, zu der die Produktionsmaschine gehört.

Wünschenswert wäre es, wenn derartige Produktionsunterbrechungen vermieden werden könnten und dennoch ein hohes Sicherheitsniveau für Interaktionen der Personen mit der Fertigungszelle, insbesondere der Produktionsmaschine, gewährleistet wäre.

In analoger Weise kann allgemein bei beweglichen Objekten, beispielsweise Personen oder Fahrzeuge, insbesondere autonome oder semiautonome Fahrzeuge, wie beispielsweise autonome oder semiautonome Nutzfahrzeuge, die Gefahr bestehen, dass diese sich Produktionsmaschinen in relevanter, oder gar gefährlicher, Weise nähern, sodass bislang Produktionsunterbrechungen erforderlich sind.

Aufgabe der vorliegenden Erfindung ist es daher, Verfahren und Vorrichtungen anzubieten, die eine kollaborative Nutzung von Produktionsmaschinen zusammen mit beweglichen Objekten, beispielsweise Personen oder semiautonomen oder autonomen Fahrzeugen, in effizienter und gleichzeitig hochsicherer Weise ermöglichen.

Gelöst wird die Aufgabe durch ein Verfahren zur Steuerung einer Produktionsmaschine, wobei mit einer Sicherheitskamera dreidimensionale Bilddaten einer Umgebung der Produktionsmaschine aufgenommen werden, wobei die Sicherheitskamera die Bilddaten hinsichtlich des Vorhandenseins eines beweglichen Objekts, beispielsweise eines Körperteils, in einem Überwachungsbereich der Umgebung auswertet, wobei, wenn die Sicherheitskamera anhand der Bilddaten in dem Überwachungsbereich ein bewegliches Objekt detektiert, die Sicherheitskamera ein Signal an die Produktionsmaschine sendet, wobei auf das Signal hin die Produktionsmaschine ihren Bewegungsbereich verändert, insbesondere einschränkt und / oder verlegt, und / oder die Bewegung der Produktionsmaschine gestoppt wird.

Dabei kann die Produktionsmaschine beispielsweise einen Industrieroboter umfassen. Der Industrieroboter kann ortsfest montiert sein. Er kann einen mehrachsigen, beispielsweise einen wenigstens 6-achsigen Arm aufweisen. Die Produktionsmaschine kann auch eine Presse, eine Säge, eine CNC-Maschine, eine Fräse, eine Bohrmaschine und / oder dergleichen umfassen.

Für die Ausführung von Arbeiten kann sich die Produktionsmaschine je nach auszuführender Aufgabe innerhalb eines Bewegungsbereichs bewegen. Somit sollte sichergestellt werden, dass das bewegliche Objekt, beispielsweise das Körperteil, während der Ausführung der Arbeit nicht in den Bewegungsbereich gelangt.

Außerhalb des Bewegungsbereichs kann der Überwachungsbereich definiert sein.

Die Sicherheitskamera kann dann den Überwachungsbereich überwachen und detektiert gegebenenfalls, falls ein bewegliches Objekt, beispielsweise ein Körperteil, in den Überwachungsbereich dringt. In diesem Fall sendet sie das Signal an die Produktionsmaschine. Die Produktionsmaschine kann dann ihren Bewegungsbereich verändern, insbesondere einschränken oder verlegen. Da der Überwachungsbereich außerhalb des Bewegungsbereiches sein kann, kann sichergestellt sein, dass das bewegliche Objekt, insbesondere die Person bzw. das Körperteil, (noch) nicht in den Bewegungsbereich eingedrungen ist. Somit kann eine Kollision mit der Produktionsmaschine oder ein sonstiger Schaden des beweglichen Objekts, insbesondere des Körperteils oder der gesamten Person, durch die Produktionsmaschine wirkungsvoll und frühzeitig vermieden werden.

Eigene Untersuchungen haben gezeigt, dass eine Sicherheitskamera, die dreidimensionale Bilddaten erfasst, im Vergleich zu einer Sicherheitskamera, die lediglich zweidimensionale Bilddaten erfasst, mit deutlich geringeren Fehlerquoten, insbesondere sowohl hinsichtlich falsch-negativer als auch hinsichtlich falschpositiver Klassifikationen, bewegliche Objekte, insbesondere Körperteile, detektieren kann.

Die Sicherheitskamera kann eingerichtet sein, ein hohes Sicherheitsniveau bei der Überwachung und gegebenenfalls Detektion zu gewährleisten. Beispielsweise kann sie eingerichtet sein, eine hohe Ausfallsicherheit zu bieten. Die Sicherheitskamera kann eingerichtet sein, dass die Detektion des beweglichen Objekts eine besonders geringe Fehlerwahrscheinlichkeit für falsch-negative Klassifikationen hat. Eine solche Wahrscheinlichkeit kann beispielsweise höchstens 1 Fehler pro 10 Jahre betragen. Allgemein kann die Wahrscheinlichkeit unterhalb von 1 Fehler während einer typischen Lebensdauer der Produktionsmaschine betragen.

Das bewegliche Objekt kann zur autonomen oder semiautonomen Bewegung eingerichtet sein, es kann ein Fahrzeug, beispielsweise ein mobiler Roboter mit einem Fahrgestell, oder ein Flugobjekt, beispielsweise eine Drohne, sein, ebenso kann das bewegliche Objekt einem Körperteil eines Tieres oder eines Menschen entsprechen. Es kann sich beispielsweise um ein Transportfahrzeug, eine Hand, einen Arm, einen Kopf, ein Fuß, ein Bein oder dergleichen handeln.

Unter dem beweglichen Objekt kann auch eine Gruppe von beweglichen Objekten, beispielsweise mehrere Körperteile einer Person oder eine Person insgesamt, verstanden werden.

Die Detektion des beweglichen Objekts kann eingerichtet sein, erst Objekte ab einer bestimmten Mindestgröße, beispielsweise ab einem bestimmten Mindestvolumen oder einer bestimmten Mindestkantenlänge eines einbeschriebenen Quaders zu detektieren. Die Mindestgröße kann einstellbar sein. So können Fehlalarme beispielsweise durch Pollen oder durch umherfliegende Insekten vermieden werden.

Als Reaktion auf das Signal hin kann die Produktionsmaschine gestoppt werden. Dies kann dann besonders günstig sein, wenn der Überwachungsbereich sehr dicht an den Bewegungsbereich heranreicht, beispielsweise direkt an den Bewegungsbereich angrenzt. Allgemein kann ein solcher Stopp vorgesehen sein, wenn zu befürchten ist, dass das im Überwachungsbereich befindliche bewegliche Objekt oder ein damit verbundenes Objekt in kürzester Zeit in den Bewegungsbereich eindringen könnte oder sogar schon eingedrungen ist.

Alternativ, beispielsweise, wenn der Überwachungsbereich nicht direkt an den Bewegungsbereich angrenzt, ist auch denkbar, den Bewegungsbereich einzuschränken oder zu verlegen. Durch die Einschränkung oder Verlegung kann ein zusätzlicher Abstand zum Überwachungsbereich und damit zum beweglichen Objekt , beispielsweise zur Person bzw. dem Körperteil, eingeführt werden, um trotz der Nähe einen sicheren Weiterbetrieb der Produktionsmaschine zu gewährleisten. Beispielsweise kann die Produktionsmaschine in den eingeschränkten oder verlegten Bewegungsbereich fallende Teilarbeiten ausführen. So können vollständige Stopps der Produktionsmaschine vermieden werden.

Während die Produktionsmaschine eine solche Teilarbeit ausführt, kann das bewegliche Objekt innerhalb des Überwachungsbereiches oder angrenzender Bereiche außerhalb des Bewegungsbereiches und des Überwachungsbereichs selbst Tätigkeiten ausführen. Beispielsweise kann die Person Material zuführen oder ein fertiges Werkstück entnehmen. Auch sie kann Zeit einsparen, beispielsweise Wartezeit bis zu einem Produktionsstopp der Produktionsmaschine oder bis zu einem vollständigen Wieder-Anfahren der Produktionsmaschine.

Insgesamt können somit Arbeiten mit weniger Produktionsunterbrechungen und damit mit hoher Effizienz ausgeführt werden, wobei zudem ein hohes Sicherheitsniveau im Hinblick auf Kollisionen oder andere Unfälle zwischen der Person und der Produktionsmaschine weiterhin gewährleistet sein kann.

Die Sicherheitskamera kann eine TOF (englisch für "time of flight", also eine Photonen-Flugzeit-basierte) -Kamera umfassen, sodass sie, insbesondere im Vergleich zu beispielsweise einer Stereokamera, dreidimensionale Bilddaten über einen großen Entfernungsbereich, insbesondere von nah bis fern, hinweg in hoher Qualität aufnehmen kann.

Die Sicherheitskamera kann fehlersicher, englisch failsafe, ausgebildet sein. Sie kann dazu eingerichtet sein, kontinuierlich Selbsttests durchzuführen. Ergibt sich ein Störfall, beispielsweise weil ein Selbsttest fehlgeschlagen ist, kann die Sicherheitskamera ein den Störfall signalisierendes Störfall-Signal an die Produktionsmaschine senden. Sie kann auch ein optisches und / oder ein akustisches Warnsignal ausgeben. Auf das Störfall-Signal hin kann die Produktionsmaschine beispielsweise stoppen oder allgemein eine Not-Aus-Funktion auslösen.

Die Sicherheitskamera kann auch eingerichtet sein, sich im Falle eines Störfalls selbst zu verriegeln. Denkbar ist, dass die Verriegelung erst aufgehoben und damit zu einem Normalbetrieb der Sicherheitskamera zurückgekehrt werden kann, nachdem die Sicherheitskamera und gegebenenfalls die Umgebung manuell überprüft worden ist und / oder die Sicherheitskamera manuell zurückgesetzt worden ist.

Auch ist denkbar, dass die Produktionsmaschine eingerichtet ist, sich nur zu arbeiten, insbesondere sich nur zu bewegen, wenn sie von der Sicherheitskamera kontinuierlich oder in regelmäßigen, hochfrequenten Zeitabständen ein positives Signal erhält, dass kein bewegliches Objekt, beispielsweise Körperteil, detektiert ist und dass die Sicherheitskamera fehlerfrei ist und dazu beispielsweise alle Selbsttests erfolgreich durchgeführt worden sind.

Anstelle oder ergänzend zu einem Stopp kann die Produktionsmaschine auch eingerichtet sein, sich auf einem definierten, geschützten Weg in eine geschützte Ausgangsposition zurückzubegeben.

Die Sicherheitskamera kann mindestens nach SIL-2, insbesondere SIL-3, beispielsweise jeweils gemäß IEC61508:2010 in Verbindung mit der Maschinenrichtlinie EN ISO 2006/42/EG, zertifiziert sein. Dazu kann die Sicherheitskamera eingerichtet sein, beispielsweise die Norm EN ISO 13849-1:2023 zu erfüllen.

Allgemein kann die Sicherheitskamera eingerichtet sein, kontinuierlich eine Detektionswahrscheinlichkeit bezüglich der Detektion des beweglichen Objekts zu ermitteln. Dazu können beispielsweise neben Selbsttests der Hardware und / oder der Software der Sicherheitskamera auch Prüfungen beispielsweise der Sichtbedingungen vorgesehen sein. Zur Prüfung der Sichtbedingungen ist es denkbar, Bildparameter wie beispielsweise eine Schärfe, eine Helligkeit und / oder einen Kontrast aufgenommener Bilddaten zu untersuchen. Alternativ oder ergänzend ist denkbar, dass die Bildqualität und / oder das Vorhandensein bestimmter Bildkomponenten in den Bilddaten, beispielsweise von nicht veränderlichen Teilen der Umgebung, überwacht werden.

Denkbar ist auch, dass die Sicherheitskamera mehrere Einzelkameras umfasst. Die Einzelkameras können an unterschiedlichen Orten angeordnet sein. Insbesondere kann wenigstens eine Einzelkamera oder allgemein die Sicherheitskamera in einer Distanz zur Produktionsmaschine angeordnet sein. So lässt sich der Überwachungsbereich unabhängig von einer momentanen Position der Produktionsmaschine von zumindest einer ortsfesten Position aus überwachen. Durch Nutzung mehrerer Einzelkameras lassen sich auch auf einfache Weise Verschattungen oder Verdeckungen durch die Produktionsmaschine oder dergleichen umgehen.

Für einen umfassenden Schutz vor Fehlfunktionen und somit zur weiteren Verbesserung der Sicherheit kann auch eine korrekte Funktion der Produktionsmaschine überwacht werden.

Dazu kann vorgesehen sein, dass die Sicherheitskamera die Bilddaten hinsichtlich des Vorhandenseins der Produktionsmaschine im Überwachungsbereich auswertet.

Ist der Überwachungsbereich geeignet definiert, so sollte bei einer normalen Funktion der Produktionsmaschine diese niemals in den Überwachungsbereich eindringen. Sollte dies doch geschehen, so ist von einer Fehlfunktion der Produktionsmaschine auszugehen. Beispielsweise könnte bei einem Industrieroboter mit einem mehrachsigen Arm einer seiner Antriebe und / oder Gelenke eine Fehlfunktion aufweisen, sodass er nicht mehr die eigentlich vorgesehene Position, sondern eine falsche Position, insbesondere innerhalb des Überwachungsbereichs, erreicht.

Daher kann in so einem Fall, wenn die Sicherheitskamera anhand der Bilddaten in dem Überwachungsbereich die Produktionsmaschine detektiert, die Sicherheitskamera ein Signal an die Produktionsmaschine senden.

Das Signal kann beispielsweise eine Not-Aus-Funktion der Produktionsmaschine auslösen. Das Signal kann ein Gefahrensignal und / oder ein Warnsignal umfassen.

Die Sicherheitskamera kann auch ein optisches und / oder akustisches Signal, beispielsweise um die Person vor einer Gefahrensituation zu warnen, ausgeben.

Weiter ist denkbar, dass die Sicherheitskamera eine regelbasierte Auswertungslogik zur Detektion des beweglichen Objekts nutzt. Eine solche regelbasierte Auswertungslogik kann einen oder mehrere Sätze von vordefinierten, nicht durch die Sicherheitskamera selbst änderbare, Regeln umfassen. Insbesondere kann sie rein deterministisch, also ohne einen Maschinenlerner wie beispielsweise ein neuronales Netz oder ein SVG oder dergleichen, ausgebildet sein.

Eine solche regelbasierte Auswertungslogik lässt sich einfach validieren, wodurch sich das Sicherheitsniveau der Sicherheitskamera insgesamt einfach und reproduzierbar prüfen lässt.

Allgemein kann es günstig sein, wenn die Sicherheitskamera sowohl wenigstens eine Einzelkamera zur Aufnahme der dreidimensionalen Bilddaten als auch die Auswertungslogik zur Auswertung der dreidimensionalen Bilddaten vereint. Insbesondere kann sie insgesamt als Einheit, umfassend die Einzelkameras als auch die Auswertungslogik, sicherheitszertifiziert sein. Damit kann sichergestellt sein, dass nicht nur die Bildaufnahmen korrekt erfolgen, sondern dass auch die Auswertung und gegebenenfalls die Detektion des beweglichen Objekts wie vorgesehen erfolgen. Auch dies kann die Sicherheit während der Nutzung der Produktionsmaschine verbessern.

Die Sicherheitskamera kann die Bilddaten hinsichtlich des Vorhandenseins einer, insbesondere im oder am Überwachungsbereich, befindlichen Kontrollmarkierung auswerten. Wenn die Sicherheitskamera die Kontrollmarkierung nicht detektiert, kann sie ein Signal an die Produktionsmaschine und / oder ein, insbesondere akustisches und / oder optisches, Warnsignal aussenden. Die Kontrollmarkierung kann beispielsweise an Rändern des Überwachungsbereichs angeordnet sein. Dann kann die Sicherheitskamera überprüfen, ob sie überhaupt mit ihren Bilddaten den gesamten Überwachungsbereich erfasst, ob ausreichende Sichtbedingungen herrschen und / oder dergleichen. So kann die Sicherheit während der Nutzung der Produktionsmaschine noch weiter abgesichert werden.

Denkbar ist, dass unterschiedliche Arten von Überwachungsbereichen überwacht werden.

Beispielsweise kann es einen Warnbereich geben. Wird ein bewegliches Objekt im Warnbereich detektiert, kann beispielsweise der Bewegungsbereich eingeschränkt werden. Auch kann der Überwachungsbereich verlagert werden und / oder anderweitig verändert werden. Die Sicherheitskamera kann ein Warnsignal an die Produktionsmaschine senden. Zudem kann sie ein akustisches und / oder optisches Signal ausgeben.

Eine weitere Art eines Überwachungsbereichs kann einen Gefahrenbereich betreffen. Der Gefahrenbereich kann beispielsweise sehr dicht an einem aktuellen Bewegungsbereich der Produktionsmaschine liegen oder sogar an diesen direkt angrenzen.

Wird ein bewegliches Objekt, beispielsweise ein Körperteil, im Gefahrenbereich detektiert, kann die Produktionsmaschine durch ein entsprechendes Gefahrensignal der Sicherheitskamera gestoppt oder in einen sicheren Ausgangszustand zurückversetzt werden. Alternativ oder ergänzend kann die Sicherheitskamera wiederum ein, insbesondere optisches und / oder akustisches, Signal aussenden.

Denkbar ist, dass die Signale der Sicherheitskamera, insbesondere das Warnsignal und / oder das Gefahrensignal, drahtlos und / oder drahtgebunden mittels elektronischer Kommunikation, direkt und / oder indirekt an die Produktionsmaschine und gegebenenfalls auch an weitere Ziele, beispielsweise an ein zentrales Rechnersystem, kommuniziert werden. So kann, insbesondere im Falle einer Vielzahl von Produktionsmaschinen, eine Zentrale benachrichtigt werden, wenn bei einer der Produktionsmaschinen das bewegliche Objekt in einem Warnbereich und / oder einem Gefahrenbereich detektiert worden ist.

Das Gefahrensignal kann ein Not-Aus-Signal sein, das bei der Produktionsmaschine eine Not-Aus-Funktion auslöst und dadurch beispielsweise die Produktionsmaschine stoppt und / oder von der Energieversorgung trennt.

Bei einer Klasse von Verfahren kann vorgesehen sein, dass die Sicherheitskamera die Bilddaten hinsichtlich des Vorhandenseins eines beweglichen Objekts in voneinander abgegrenzten Überwachungsbereichen der Umgebung auswertet, wobei die Sicherheitskamera bei Detektion des beweglichen Objekts in einem der Überwachungsbereiche je nach Überwachungsbereich ein für den Überwachungsbereich und / oder eine Art des Überwachungsbereichs spezifisches Signal an die Produktionsmaschine sendet, wobei die Produktionsmaschine je nach spezifischem Signal ihren Bewegungsbereich verändert, insbesondere einschränkt und / oder verlegt, und / oder die Bewegung der Produktionsmaschine gestoppt wird.

Je nach Art des Überwachungsbereichs kann die Sicherheitskamera somit beispielsweise ein Warnsignal oder ein Gefahrensignal senden. So ist denkbar, den Überwachungsbereich zu untergliedern. Beispielsweise kann in einem Außenbereich ein Warnbereich vorgesehen sein, an den in Richtung zum Bewegungsbereich der Produktionsmaschine hin ein Gefahrenbereich angrenzt.

So kann, wenn das bewegliche Objekt oder ein Teil dessen den Warnbereich erreicht, ein Warnsignal gesendet werden, sodass zunächst die Produktionsmaschine ihren Bewegungsbereich einschränkt und beispielsweise nur noch in den eingeschränkten Bewegungsbereich fallende Teilarbeiten ausführt. Nähert sich das bewegliche Objekt noch weiter der Produktionsmaschine, erreicht beispielsweise das Körperteil den Gefahrenbereich, so kann die Sicherheitskamera ein Gefahrensignal an die Produktionsmaschine senden und dadurch beispielsweise die Not-Aus-Funktion auslösen.

Denkbar ist auch, dass mehrere Warnbereiche vorgesehen sind. Je nachdem, in welchem Warnbereich das bewegliche Objekt detektiert wird, können unterschiedliche Bewegungsbereiche ausgewählt und / oder der aktuelle Bewegungsbereich in Abhängigkeit vom betroffenen Warnbereich unterschiedlich eingeschränkt werden.

Bei einer Fertigungszelle mit einem Industrieroboter kann beispielsweise vorgesehen sein, dass der Industrieroboter Material von unterschiedlichen Materialwechselplätzen zu unterschiedlichen Maschinen, beispielsweise zu einer ersten oder einer zweiten Maschine, oder von unterschiedlichen Maschinen bearbeitete Werkstücke zu einem der Materialwechselplätze transportiert. Dann können unterschiedliche Warnbereiche eingerichtet sein. Wird das bewegliche Objekt beispielsweise in einem ersten Warnbereich detektiert, so kann ein Warnsignal an die Produktionsmaschine gesandt werden, sodass die Produktionsmaschine beispielsweise nur noch Material von einem zweiten Materialwechselplatz zu der zweiten Maschine oder fertige Werkstücke von der zweiten Maschine zum zweiten Materialwechselplatz bringt. Dementsprechend kann auch vorgesehen sein, dass, wenn das bewegliche Objekt in dem zweiten Warnbereich detektiert wird, ein Warnsignal an die Produktionsmaschine gesandt wird, sodass die Produktionsmaschine nur noch Material von dem ersten Materialwechselplatz zu der ersten Maschine oder fertige Werkstücke von der ersten Maschine zum ersten Materialwechselplatz bringt.

Dementsprechend kann der Bewegungsbereich entweder auf Bewegungen zwischen dem zweiten Materialwechselplatz und der zweiten Maschine oder dem ersten Materialwechselplatz und der ersten Maschine beschränkt werden.

Wird in keinem Überwachungsbereich ein bewegliches Objekt, beispielsweise kein Körperteil, detektiert, kann der Bewegungsbereich Bewegungen zwischen allen Materialwechselplätzen und allen Maschinen umfassen.

Während der Bewegungen der Produktionsmaschine innerhalb des jeweiligen, beschränkten Bewegungsbereichs, kann sich die Person innerhalb eines erweiterten Bereichs, insbesondere außerhalb des beschränkten Bewegungsbereiches, sicher bewegen.

Wenn sich beispielsweise der Bewegungsbereich lediglich auf den zweiten Materialwechselplatz und die zweite Maschine beschränkt, kann die Person Material am ersten Materialwechselplatz nachfüllen oder andere Tätigkeiten in dem Bereich vollziehen.

Wird das bewegliche Objekt nicht mehr detektiert, kann der Überwachungsbereich und / oder der Bewegungsbereich auf einen Ausgangszustand zurückgesetzt werden. Die Bereiche können auf ursprüngliche Bereiche zurückgesetzt werden, die zulässig sind, wenn sich das gesamte bewegliche Objekt, beispielsweise die Person, außerhalb der Reichweite der Produktionsmaschine, beispielsweise außerhalb der Fertigungszelle befindet. Dann kann die Produktionsmaschine wieder alle Arten von Teilarbeiten ausführen.

Das Verfahren lässt sich insbesondere bei Fertigungszellen besonders vorteilhaft anwenden. Ein häufiger Fall für eine Kollaboration zwischen einer Produktionsmaschine und der Person ergibt sich, wenn der Bewegungsbereich einen Materialwechselplatz umfasst. Dank des Verfahrens lassen sich Produktionsunterbrechungen bei einer solchen Konstellation weitestgehend vermeiden.

Bei einer weiteren Klasse von Varianten des Verfahrens ist denkbar, dass wenigstens zwei, voneinander beabstandete, bewegliche Objekte, beispielsweise zwei verschiedene Körperteile, beispielsweise zwei Arme oder zwei Hände einer Person, detektiert werden. Beispielsweise kann die Sicherheitskamera eingerichtet sein, zwei unterschiedliche Hände, Arme oder andere Gliedmaßen einer Person zu detektieren. Es kann auch vorgesehen sein, dass die wenigstens zwei beweglichen Objekte gleichzeitig oder zumindest pseudosimultan in zwei voneinander getrennten Überwachungsbereichen detektiert werden. Es kann auch vorgesehen sein, dass die Sicherheitskamera überprüft, ob die beiden bewegliche Objekte einen Mindestabstand und / oder einen Höchstabstand voneinander einhalten. Mit einer solchen Sicherheitskamera kann somit eine Zweihandschaltung zur Steuerung der Produktionsmaschine aufgebaut werden. Bei entsprechendem Sicherheitsniveau, beispielsweise mindestens SIL-2, kann eine Sicherheitskamera günstiger sein als beispielsweise zwei Sicherheitstaster mit dem gleichen Sicherheitsniveau. Somit kann eine solche Zweihandschaltung auch besonders kostengünstig herstellbar sein. Zudem können im Gegensatz zu beispielsweise einer manuellen Zweihandschaltung auf Basis zweier mechanischer Taster unterschiedliche Varianten von Positionen der beweglichen Objekte ausgewertet werden. Beispielsweise ist die Person nicht auf einen einzigen Aufenthaltsort, von dem aus sie die mechanischen Taster beidhändig erreichen kann, beschränkt. Vielmehr kann die Detektion der Körperteile auch innerhalb eines großen Überwachungsbereichs erfolgen. Dadurch lassen sich Zeiten minimieren, bis die Person ihre Körperteile oder allgemein das gesamte bewegliche Objekte seine Teile in die gewünschte Position gebracht hat. Auch dadurch lässt sich die Gesamteffizienz der Produktionsmaschine verbessern.

Mit dem Verfahren kann eine Sicherheitsfunktion der Produktionsmaschine gesteuert werden. Insbesondere ist denkbar, dass das Signal, insbesondere das Gefahrensignal, der Sicherheitskamera eine Not-Aus-Funktion der Produktionsmaschine auslöst. Die Not-Aus-Funktion kann auch umfassen, dass die Produktionsmaschine stromlos geschaltet wird. Auch ist denkbar, im Rahmen der Not-Aus-Funktion ein oder mehrere Gelenke, beispielsweise des mehrachsigen Arms des Industrieroboters, auf einen Freilauf zu schalten, sodass Auswirkungen bei einer Kollision mit der Produktionsmaschine, insbesondere mit dem Industrieroboter, minimiert werden können.

Denkbar ist auch, dass die Sicherheitskamera eine Bewegung und / oder eine Position des beweglichen Objekts, beispielsweise eine relative Position des Körperteils zu einem übrigen Körper der Person, detektiert und daraufhin ein entsprechendes Signal aussendet.

Denkbar ist auch, dass die Sicherheitskamera eingerichtet ist, bei Detektion einer bestimmten Bewegung unabhängig von dem Überwachungsbereich und / oder der Art des Überwachungsbereichs ein bestimmtes Signal, beispielsweise ein Gefahrensignal, auszusenden.

Insbesondere können bestimmte Positionen und / oder bestimmte Bewegungen der wenigstens zwei beweglichen Objekte, beispielsweise zwei Körperteile, relativ zu einem gemeinsamen Bezugspunkt, beispielsweise einem übrigen Körper einer betreffenden Person, überwacht werden. Gerade in Notfallsituationen können beispielsweise Personen typische Bewegungen, insbesondere mit beiden Händen, ausführen. Beispielsweise werden häufig beide Hände nach oben ausgestreckt.

Gleichförmige Bewegungen beider Hände auf Höhe des Oberkörpers der Person oder höher können ebenfalls auf eine Notfallsituationen hindeuten.

Befinden sich beispielsweise beide Arme der Person unterhalb einer bestimmten Höhe, liegt beispielsweise die Person am Boden, so kann das im Kontext einer Fertigungszelle in der Regel ebenfalls als Notfallsituation, insbesondere unabhängig vom betroffenen Überwachungsbereich, gewertet werden.

Denkbar ist auch, dass die Sicherheitskamera eine Abfolge bestimmter Bewegungen und / oder Positionen des beweglichen Objekts detektiert und ein entsprechendes Signal an die Produktionsmaschine sendet.

So ist denkbar, dass zunächst auf eine erste Detektion eines beweglichen Objekts, beispielsweise des Körperteils, insbesondere einer Detektion einer Position und / oder einer Bewegung des Körperteils, hin die Not-Aus-Funktion ausgelöst wird und auf eine anschließende zweite Detektion eines beweglichen Objekts, beispielsweise des Körperteils und / oder eines anderen Körperteils, hin ein Rücksetzsignal zum Rücksetzen der Not-Aus-Funktion an die Produktionsmaschine gesendet wird.

Die erste Detektion kann sich dabei auf eine andere Position und / oder Bewegung beziehen als die zweite Detektion. Das Rücksetzsignal kann eingerichtet sein, die Sicherheitskamera und / oder die Produktionsmaschine zu entriegeln, sodass die Sicherheitskamera und / oder die Produktionsmaschine manuell zurückgesetzt werden können. Alternativ ist auch denkbar, dass das Rücksetzsignal die Sicherheitskamera und / oder die Produktionsmaschine unmittelbar zurücksetzt. Auch ist denkbar, dass sich die erste Detektion auf eine beliebige Position und / oder Bewegung des beweglichen Objekts, beispielsweise des Körperteils, innerhalb des Überwachungsbereichs bezieht, wohingegen die zweite Detektion sich auf eine spezifische Bewegung, Position und / oder einen spezifischen Ort bezieht. Die zweite Detektion kann auch lediglich dann vorgesehen sein, wenn das zugehörige bewegliche Objekt die zugehörige Position und / oder Bewegung innerhalb eines definierten Zeitintervalls erreicht.

So kann mit einer beliebigen Position und / oder Bewegung in dem Überwachungsbereich der Bewegungsbereich der Positionsmaschine eingeschränkt und / oder die Not-Aus-Funktion ausgelöst werden. Dadurch kann die jeweilige Situation abgesichert werden. Aus diesem abgesicherten Zustand heraus kann dann im Rahmen der zweiten Detektion nur bei einer bestimmten Position und / oder einer bestimmten Bewegung die Sicherheitskamera und / oder die Produktionsmaschine entriegelt oder sogar neu gestartet werden. So lassen sich irrtümliche oder verfrühte Neustarts der Sicherheitskamera und / oder der Produktionsmaschine verhindern und Gefahren für die Person weiter gesenkt werden.

Die erste Detektion kann sich beispielsweise, sofern sie sich nicht sowieso auf eine beliebige Bewegung bezieht, auf hektische und / oder rasche Bewegungen beziehen, wohingegen die zweite Detektion sich beispielsweise auf eine langsame, komplexe Bewegung beziehen kann.

Eine Bewegung, mit der die Sicherheitskamera und / oder die Produktionsmaschine wieder aktiviert werden können, wie beispielsweise im Falle der zweiten Detektion, kann eine symmetrische und / oder eine antiparallele Bewegung und / oder Position von Körperteilen betreffen.

Insbesondere antiparallele Bewegungen oder Positionen ergeben sich normalerweise nicht durch Zufall und lassen sich auch mit geringem Aufwand, selbst mit Hilfe einer regelbasierten Auswertungslogik, einfach und mit äußerst geringer Fehlerquote detektieren.

Werden bewegliche Objekte, beispielsweise Körperteile und / oder Positionen und / oder Bewegungen der Körperteile, von mehreren gesamten beweglichen Objekten, beispielsweise Personen. detektiert, so kann vorgesehen sein, dass zum Stopp, beispielsweise durch Auslösen der Not-Aus-Funktion, und / oder zur Beschränkung des Bewegungsbereiches es genügt, dass wenigstens eines der beweglichen Objekte, beispielsweise wenigstens eine der Personen, die betreffende Position und / oder Bewegung, beispielsweise eines Körperteils, zeigt.

Für eine Freigabe, beispielsweise eine Entriegelung oder ein Rücksetzen, der Sicherheitskamera und / oder der Produktionsmaschine kann dagegen vorgesehen sein, dass all erkannten beweglichen Objekte, beispielsweise alle Personen, die betreffende Position und / oder Bewegung zeigen. So kann, insbesondere im Falle von mehreren Personen, die Sicherheit weiter verbessert werden.

In den Rahmen der Erfindung fällt des Weiteren eine Fertigungsanlage, umfassend eine Produktionsmaschine und eine Sicherheitskamera, wobei die Fertigungsanlage eingerichtet ist, das Verfahren der vorangehend beschriebenen Art zu implementieren. Durch seltene Produktionsstopps kann eine solche Fertigungsanlage eine besonders hohe Produktivität erreichen. Die Fertigungsanlage kann eine Vielzahl von Produktionsmaschinen und / oder Sicherheitskameras umfassen. Die Fertigungsanlage kann beispielsweise eine Fertigungsstraße und / oder eine Fertigungszelle sein.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungswesentliche Einzelheiten zeigen, sowie aus den Ansprüchen.

Die einzelnen Merkmale können je einzeln für sich oder zu mehreren in beliebigen Kombinationen bei Varianten der Erfindung verwirklicht sein. In der schematischen Zeichnung sind Ausführungsbeispiele der Erfindung dargestellt, welche in der nachfolgenden Beschreibung näher erläutert werden.

### Kurze Beschreibung der Zeichnungen

Es zeigen:
- Fig. 1: eine Fertigungsanlage in einer schematischen Ansicht von oben in einem ersten Zustand,
- Fig. 2: die Fertigungsanlage in einer schematischen Ansicht von oben in einem zweiten Zustand,
- Fig. 3: eine Sicherheitskamera in schematischer Darstellung und
- Fig. 4: eine weitere Fertigungsanlage in einer schematischen Ansicht, die von einer Person mithilfe einer antiparallelen Position ihrer Arme bedient wird,
- Fig. 5: die Fertigungsanlage gemäß Fig. 4, wobei die Person eine symmetrische Position zeigt und
- Fig. 6: ein Verfahren zur Steuerung einer Produktionsmaschine.

Zur Erleichterung des Verständnisses der Erfindung werden in der nachfolgenden Figurenbeschreibung für sich entsprechende Elemente jeweils die gleichen Bezugszeichen verwendet.

### Ausführungsformen der Erfindung

Zur Erleichterung des Verständnisses werden im Folgenden das Verfahren und die Fertigungsanlage anhand von Beispielen dargestellt, bei denen als bewegliches Objekt ein Körperteil einer Person bestimmt ist. Es versteht sich, dass andere Arten von beweglichen Objekten, beispielsweise wie vorangehend genannt, in analoger Weise denkbar sind.

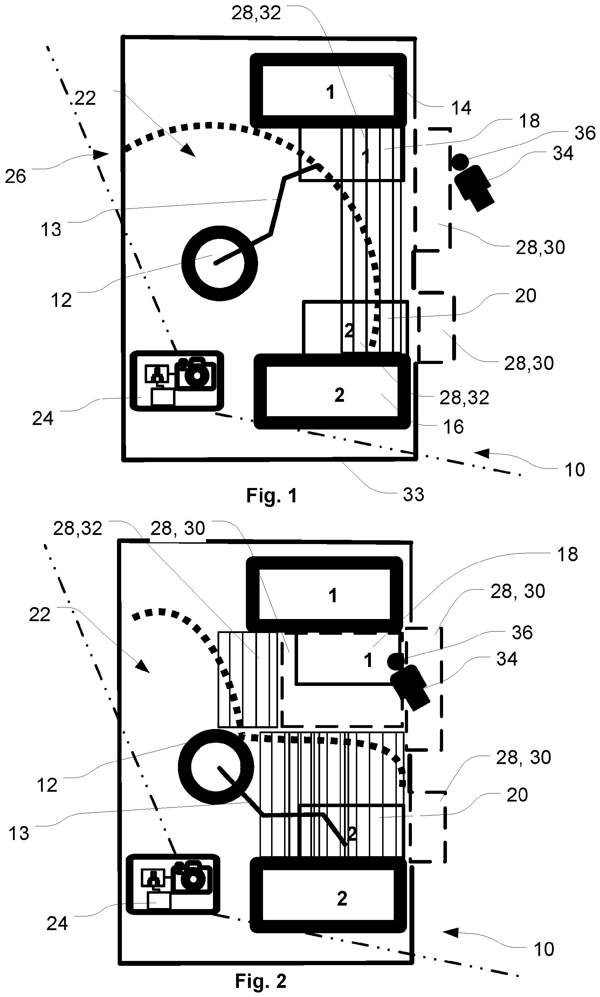

Fig. 1 zeigt eine Fertigungsanlage 10 in Form einer Fertigungszelle. Die Fertigungsanlage 10 umfasst eine Produktionsmaschine 12 in Form eines, beispielsweise ortsfest montierten, Industrieroboters. Die Produktionsmaschine 12 weist einen mehrachsigen Arm 13 auf. Innerhalb der Fertigungsanlage 10 befindet sich des Weiteren eine erste Maschine 14 sowie eine zweite Maschine 16.

Den Maschinen 14, 16 sind jeweils Materialwechselplätze 18, 20 zugeordnet. Die Materialwechselplätze 18, 20 dienen beispielsweise zur Zwischenablage von Material und Werkstücken für die jeweils betreffenden Maschinen 14, 16.

Die Produktionsmaschine 12 ist eingerichtet, unterschiedliche Arbeiten innerhalb der Fertigungsanlage 10 auszuführen. Unter anderem kann beispielsweise eine Arbeit darin bestehen, Material und / oder Werkstücke zwischen den beiden Materialwechselplätzen 18, 20 zu transportieren. Daraus ergeben sich Teilarbeiten wie beispielsweise Verlagerungen und Stapelarbeiten innerhalb jedes der beiden Materialwechselplätze 18, 20. Allgemein ist denkbar, dass die Produktionsmaschine 12 Arbeiten ausführt, die entweder übergreifend beide Maschinen 14, 16 und / oder beide Materialwechselplätze 18, 20 betreffen oder die lediglich spezifisch entweder die Maschine 14 mit ihrem Materialwechselplatz 18 oder die Maschine 16 mit ihrem Materialwechselplatz 20 betreffen.

Im in Fig. 1 gezeigten Zustand führt die Produktionsmaschine 12 eine übergreifende Arbeit aus. Dazu muss sie sich beispielsweise zwischen den beiden Materialwechselplätzen 18 und 20 bewegen. Insgesamt muss ihr Arm 13 daher Bewegungen innerhalb eines Bewegungsbereiches 22 ausführen.

Eine Sicherheitskamera 24 nimmt Bildaufnahmen einer Umgebung 26 auf, die unter anderem den Bewegungsbereich 22, die Materialwechselplätze 18, 20 sowie daran angrenzende Bereiche einschließt.

Zu erkennen sind des Weiteren Überwachungsbereiche 28 in Form zweier Warnbereiche 30 und einem Gefahrenbereich 32.

Die Fertigungsanlage 10 ist von einem Schutzelement 33, insbesondere einem Schutzgitter, umzäunt und nur im Bereich der Warnbereiche 30 geöffnet. Dementsprechend befinden sich die Warnbereiche 30 an den Öffnungen zur Fertigungsanlage 10.

Der Gefahrenbereich 32 grenzt an die Warnbereiche 30 an. Er befindet sich beispielhaft innerhalb der Fertigungsanlage 10 in unmittelbarer Nähe zum Bewegungsbereich 22, den er in diesem Ausführungsbeispiel teilweise auch überdeckt. Unter anderem überdeckt der Gefahrenbereich 32 auch die Materialwechselplätze 18, 20 zumindest teilweise. Insbesondere grenzt der Gefahrenbereich 32 den Bewegungsbereich 22 zum Warnbereich 30 hin ab.

Somit kann eine Person 34 nicht in den Bewegungsbereich 22 eindringen, ohne zunächst in einen der Warnbereiche 30 und dann in den Gefahrenbereich 32 einzudringen.

Die Überwachungsbereiche 28, also die Warnbereiche 30 und der Gefahrenbereich 32, entsprechen Bereichen, die die Sicherheitskamera 24 anhand der vor ihr aufgenommenen Bilddaten auswertet. Insbesondere detektiert die Sicherheitskamera 24, ob sich in diesen Überwachungsbereichen 28 ein Körperteil 36 einer Person 34, beispielsweise ein Kopf, eine Hand oder dergleichen, in dem jeweiligen Überwachungsbereich 28 befindet.

Im in Fig. 1 gezeigten Zustand befindet sich jedoch die Person 34 mit ihren Körperteilen 36 außerhalb der Fertigungsanlage 10 und außerhalb der Warnbereiche 30.

Fig. 2 zeigt die Fertigungsanlagen 10 in einem Zustand, bei dem die Person 34 mit ihrem Körperteil 36 durch einen der Warnbereiche 30 tritt, um am ersten Materialwechselplatz 18 beispielsweise Material nachzufüllen und / oder Werkstücke zu entnehmen.

Zu erkennen ist, dass sich der Bewegungsbereich 22 verändert hat. Aus dem neuen Bewegungsbereich 22 ist zu entnehmen, dass sich der Arm 13 nicht mehr zum Materialwechselplatz 18 bewegt. Die Produktionsmaschine 12 führt dementsprechend eine Teilarbeit aus, die spezifisch den zweiten Materialwechselplatz 20 betrifft.

Zu erkennen ist ferner, dass sich die Überwachungsbereiche 28 verändert haben. Insbesondere ist ein Warnbereich 30, der den Materialwechselplatz 18 umfasst, hinzugekommen.

Der Gefahrenbereich 32 umfasst nunmehr nicht mehr den Materialwechselplatz 18, sondern grenzt an den geänderten Warnbereich 30 an.

Insbesondere grenzt der Gefahrenbereich 32 wiederum den neuen Bewegungsbereich 22 zum Warnbereich 30 hin ab.

In beiden Situationen ist es somit für die Person 34 nicht möglich, in den Bewegungsbereich 22 einzugreifen, ohne in den Gefahrenbereich 32 einzudringen oder durch den Gefahrenbereich 32 hindurchzutreten oder hindurchzugreifen.

Die Sicherheitskamera 24 nimmt kontinuierlich dreidimensionale Bildaufnahmen der Umgebung 26 auf. Sie wertet die Bildaufnahmen kontinuierlich aus. Insbesondere prüft sie, ob sich ein Körperteil 36, beispielsweise die gesamte Person 34, in einem der Überwachungsbereiche 28 befindet.

Detektiert sie den Körperteil 36 in einem der Überwachungsbereiche 28, sendet sie je nach Art des Überwachungsbereichs 28, also je nachdem, um welchen Warnbereich 30 oder Gefahrenbereich 32 es sich handelt, ein Signal an die Produktionsmaschine 12.

Ausgehend vom Zustand gemäß Fig. 1 betritt die Person 34 die Fertigungsanlage 10 und betritt dazu unter anderem den zu der ersten Maschine 14 und dem ersten Materialwechselplatz 18 zugeordneten Warnbereich 30.

Dies detektiert die Sicherheitskamera 24 und sendet ein entsprechendes Signal an die Produktionsmaschine 12. Auf das Signal hin verändert die Produktionsmaschine 12 ihren Bewegungsbereich 22 zu dem neuen Bewegungsbereich 22 gemäß Fig. 2.

Sollte sich der Arm 13 in dem Moment außerhalb des neuen Bewegungsbereiches 22 befinden, zieht sie den Arm 13 mit einer definierten, für etwaige Kollisionen unschädliche, geringen Geschwindigkeit zurück, bis der Arm 13 sich nur noch im neuen Bewegungsbereich 22 gemäß Fig. 2 befindet.

Darüber hinaus ändert die Sicherheitskamera 24 die von ihr überwachten Überwachungsbereiche 28, sodass sich die neuen Warnbereich 30 und der neue Gefahrenbereich 32 gemäß Fig. 2 ergeben.

Somit ergibt sich der in Fig. 2 gezeigte neue Zustand.

Die Überwachungsbereiche 28 in den unterschiedlichen, denkbaren Zuständen, können vor oder während beispielsweise der Installation der Fertigungsanlage 10 fest eingestellt sein, sodass die Sicherheitskamera 24 lediglich in Abhängigkeit des jeweils durch ihre Detektion festgestellten Zustands einen geeigneten Satz von Überwachungsbereichen 28 auswählen kann.

Sobald die Person 34 die Warnbereiche 30 verlässt und die Sicherheitskamera 24 kein Körperteil 36 mehr detektiert, werden die Überwachungsbereiche 30 wieder auf den Zustand gemäß Fig. 1 zurückgesetzt.

Auf Empfang eines Signals, das einen Eintritt in einen Gefahrenbereich 32 signalisiert, führt die Produktionsmaschine 12 unverzüglich beispielsweise eine Notaus-Funktion aus, die sie sicher deaktiviert, beispielsweise stromlos schaltet.

In analoger Weise werden Überwachungsbereiche 28 und der Bewegungsbereich 22 verändert, wenn ein Körperteil im in Fig. 1 unteren, der zweiten Maschine 16 und dem zweiten Materialwechselplatz 20 zugeordneten Warnbereich 30 detektiert wird. In diesem Fall führt die Produktionsmaschine 12 spezifische Teilarbeiten aus, die nur die erste Maschine 14 und / oder den ersten Materialwechselplatz 18 betreffen.

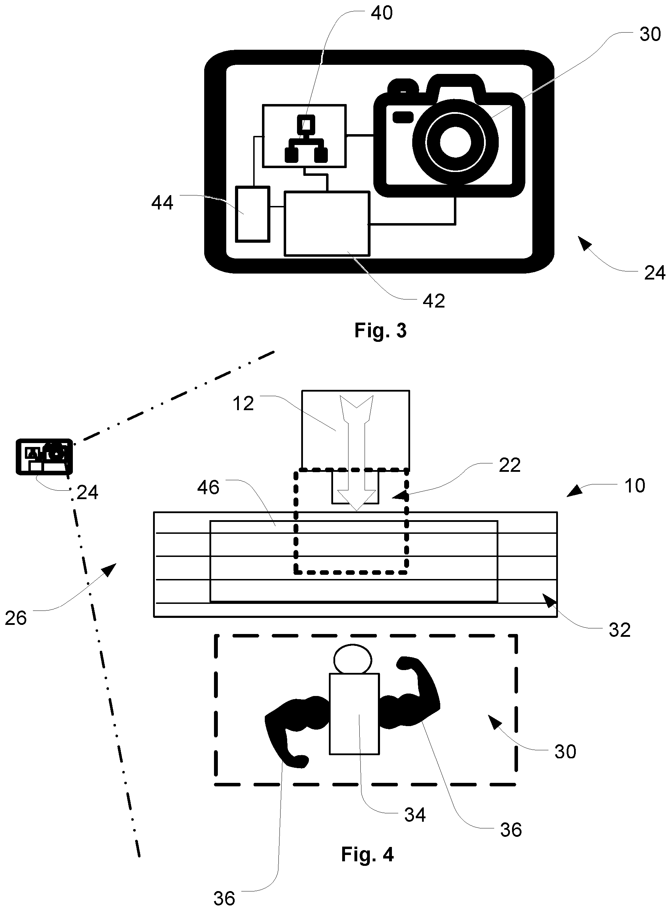

Fig. 3 zeigt in einer schematischen Darstellung die Sicherheitskamera 24.

Die Sicherheitskamera 24 umfasst eine ToF-Kamera 38, mit der sie dreidimensionale Bildaufnahmen, beispielsweise mit einer Auflösung von wenigstens 320 × 240 Punkten, beispielsweise 1920 × 1080 Punkten, und beispielsweise mit einer Entfernungsauflösung von 2 mm oder besser, sowie einer Bildrate von beispielsweise 24 Hz oder besser, beispielsweise 50 Hz, aufnehmen kann.

Die Sicherheitskamera 24 weist des Weiteren eine Auswertungslogik 40 auf. Die Auswertungslogik 40 ist, wie in Fig. 3 schematisch angedeutet, eine regelbasierte Auswertungslogik.

Die Auswertungslogik 40 ist eingerichtet, die Bildaufnahmen der ToF-Kamera 38 auszuwerten und zu detektieren, ob sich ein Körperteil 36 (siehe Fig. 1) in einem der je nach Zustand aktiven Überwachungsbereiche 28 (siehe Fig. 1) befindet.

Bei Detektion eines Körperteils 36 sendet die Sicherheitskamera 24 ein entsprechendes Signal an die Produktionsmaschine 12 (siehe ebenfalls Fig. 1).

Des Weiteren umfasst die Sicherheitskamera 24 eine Sicherheitslogik 42. Die Sicherheitslogik 42 führt in regelmäßigen Zeitabständen, beispielsweise im Sekundentakt, Selbsttests von Hardware und Software der Sicherheitskamera 24, insbesondere der ToF-Kamera 38 sowie der Auswertungslogik 40, aus.

Sofern eine Fehlfunktion detektiert wird, löst die Sicherheitslücke 42 ein Störsignal aus.

Die Signale, beispielsweise das Störsignal oder Signale aufgrund der Detektion eines Körperteils 36, werden über ein Kommunikationsmodul 44 gesendet. Die Kommunikationsmodul 44 kann dazu beispielsweise über ein Datenkabel mit der Produktionsmaschine 12 verbunden sein.

Die Sicherheitskamera 24 ist nach SIL-2 sicherheitszertifiziert.

Fig. 4 zeigt eine zweite Fertigungsanlage 10. Diese Fertigungsanlage umfasst beispielhaft eine Produktionsmaschine 12 in Form einer Stanzmaschine.

Wiederum umfasst auch diese Fertigungsanlage 10 die Sicherheitskamera 24, die Bildaufnahmen einer Umgebung 26 der Produktionsmaschine 12 aufnimmt und auswertet.

Die Produktionsmaschine 12 führt Stanzungen innerhalb eines Arbeitsbereichs 46 aus. Dazu führt sie Bewegungen innerhalb eines Bewegungsbereichs 22 aus.

Unter keinen Umständen sollte die Person 34 in den Arbeitsbereich 46 eingreifen, weshalb ein Gefahrenbereich 32 definiert ist, der den Arbeitsbereich 46 sowie eine Umgebung des Arbeitsbereich 46 überspannt.

Weiter ist beabstandet vom Gefahrenbereich 32 ein Warnbereich 30 definiert.

In dem in Fig. 4 gezeigten Zustand befindet sich die Person 34 innerhalb des Warnbereichs 30.

Dies wird durch die Sicherheitskamera 24 detektiert. Insbesondere detektiert die Auswertungslogik 40 (siehe Fig. 3) der Sicherheitskamera 24, ob innerhalb des Warnbereichs 30 zwei Körperteile 36, insbesondere zwei Arme der Person 34, in einer antiparallelen Position positioniert sind.

Ein Beispiel einer solchen, antiparallelen Position ist in Fig. 4 gezeigt. Die Person 34 hält ihren angewinkelten rechten Arm nach oben und ihren angewinkelten linken Arm nach unten.

Die Sicherheitskamera 24 detektiert diese antiparallele Position der Körperteile 36, also der Arme der Person 34, innerhalb des Warnbereichs 30. Sie sendet daraufhin ein entsprechendes Signal an die Produktionsmaschine 12. Auf das Signal hin beginnt die Produktionsmaschine 12 zu stanzen und bewegt sich dazu innerhalb des Bewegungsbereichs 22, was in Fig. 4 schematisch durch einen Pfeil angedeutet ist.

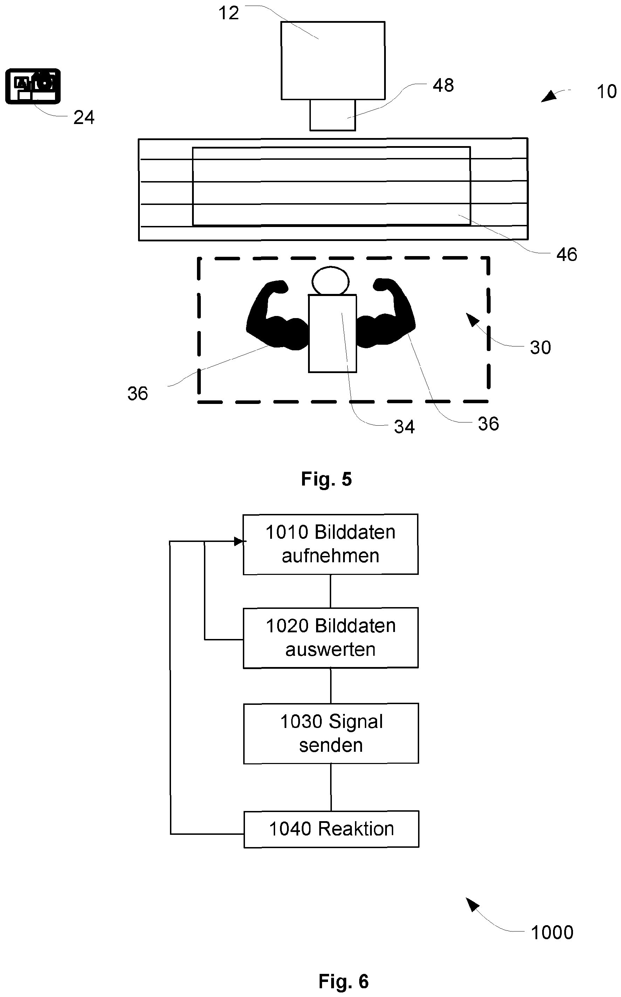

In Fig. 5 ist dieselbe Fertigungsanlage 10 dargestellt, allerdings in einem Zustand, in dem die Person 34 keine antiparallele Position ihrer Körperteile 36 zeigt. In dem gezeigten Beispiel hebt die Person 34 beide Arme nach oben.

Dies detektiert wiederum die Sicherheitskamera 34, die daraufhin ein Gefahrensignal an die Produktionsmaschine 12 sendet. Auf das Gefahrensignal hin löst die Produktionsmaschine 12 eine Not aus-Funktionen aus, die sie unverzüglich zum Stillstand in einer Ausgangsposition bringt. Die Ausgangsposition entspricht dabei einer maximal angehobenen Stanze 48, sodass in der Ausgangsposition kein Körperteil 36 oder dergleichen zwischen der Stanze 48 und dem Arbeitsbereich 46 eingeklemmt oder verletzt werden kann.

Fig. 6 zeigt in Form eines vereinfachten Flussdiagramms eines Verfahrens 1000 zur Steuerung einer Produktionsmaschine. Das Verfahren 1000 wird im Folgenden anhand der vorangehend eingeführten Elemente und Bezugszeichen näher erläutert.

In einer ersten und einer zweiten Phase 1010 und 1020 werden fortlaufend dreidimensionale Bilddaten durch die Sicherheitskamera 24 aufgenommen und ausgewertet.

Insbesondere wertet die Sicherheitskamera 24 die Bilddaten in der Phase 1020 hinsichtlich des Vorhandenseins eines Körperteils 36 in einem Überwachungsbereich 28 einer Umgebung 26 aus.

Wenn die Sicherheitskamera 24 anhand der Bilddaten in dem Überwachungsbereich 28 ein Körperteil 36 detektiert, sendet sie in einer Phase 1030 ein Signal an die Produktionsmaschine 12.

In einer Phase 1030 reagiert die Produktionsmaschine 12 auf das Signal. Beispielsweise verändert sie ihren Bewegungsbereich 22, beispielsweise bei Erhalt eines Signals, das ein Körperteil 36 innerhalb eines Warnbereichs 30 signalisiert, und / oder löst eine Not-Aus-Funktion aus, beispielsweise bei Erhalt eines Signals, das ein Körperteil 36 innerhalb eines Gefahrenbereichs 30 signalisiert. Die Not-Aus-Funktion stoppt dann unter anderem die Produktionsmaschine 12.

Je nachdem, ob ein Signal gesendet wird, kann das Verfahren 1000 nach der Phase 1020 oder während oder nach der Phase 1040 wieder beginnend mit der Phase 1010, beispielsweise bis zur Ausführung aller anstehenden Arbeiten, fortgeführt werden.

### Bezugszeichenliste

- 10: Fertigungsanlage
- 12: Produktionsmaschine
- 13: Arm
- 14: Maschine
- 16: Maschine
- 18: Materialwechselplatz
- 20: Materialwechselplatz
- 22: Bewegungsbereich
- 24: Sicherheitskamera
- 26: Umgebung
- 28: Überwachungsbereich
- 30: Warnbereich
- 32: Gefahrenbereich
- 33: Schutzelement
- 34: Person
- 36: Körperteil
- 38: ToF-Kamera
- 40: Auswertungslogik
- 42: Sicherheitslogik
- 44: Kommunikationsmodul
- 46: Arbeitsbereich
- 48: Stanze
- 1000: Verfahren
- 1010: Phase
- 1020: Phase
- 1030: Phase
- 1040: Phase

## Patentansprüche

1. Verfahren (1000) zur Steuerung einer Produktionsmaschine (12) , insbesondere eines Industrieroboters,
- wobei mit einer Sicherheitskamera (24) dreidimensionale Bilddaten einer Umgebung (26) der Produktionsmaschine (12) aufgenommen werden,
- wobei die Sicherheitskamera (24) die Bilddaten hinsichtlich des Vorhandenseins eines beweglichen Objekts, beispielsweise eines Körperteils (36), in einem Überwachungsbereich (28) der Umgebung (26) auswertet,
- wobei, wenn die Sicherheitskamera (24) anhand der Bilddaten in dem Überwachungsbereich (28) das bewegliche Objekt, beispielsweise das Körperteil (36), detektiert, die Sicherheitskamera (24) ein Signal an die Produktionsmaschine (12) sendet,
- wobei auf das Signal hin die Produktionsmaschine (12) ihren Bewegungsbereich (22) verändert, insbesondere einschränkt und / oder verlegt, und / oder die Bewegung der Produktionsmaschine (12) gestoppt wird.

2. Verfahren nach einem der vorhergehenden Patentansprüche, **dadurch gekennzeichnet, dass** die Sicherheitskamera (24) eingerichtet ist, kontinuierlich Selbsttests, insbesondere eigener Hardware und / oder Software, durchzuführen.

3. Verfahren nach einem der vorhergehenden Patentansprüche, **dadurch gekennzeichnet, dass** die Sicherheitskamera (24) die Bilddaten hinsichtlich des Vorhandenseins der Produktionsmaschine (12) im Überwachungsbereich (28) auswertet, wobei insbesondere, wenn die Sicherheitskamera (24) anhand der Bilddaten in dem Überwachungsbereich (28) die Produktionsmaschine (12) detektiert, die Sicherheitskamera (24) beispielsweise ein Signal an die Produktionsmaschine (12) sendet, das eine Not-Aus-Funktion der Produktionsmaschine (12) auslöst.

4. Verfahren nach einem der vorhergehenden Patentansprüche, **dadurch gekennzeichnet, dass** die Sicherheitskamera (24) mindestens nach SIL-2, insbesondere nach SIL-3, zertifiziert ist.

5. Verfahren nach einem der vorhergehenden Patentansprüche, **dadurch gekennzeichnet, dass** die Sicherheitskamera (24) eine regelbasierte Auswertungslogik (40) zur Detektion des beweglichen Objekts, beispielsweise des Körperteils (36), nutzt.

6. Verfahren nach einem der vorhergehenden Patentansprüche, **dadurch gekennzeichnet, dass** die Sicherheitskamera (24) die Bilddaten hinsichtlich des Vorhandenseins einer, insbesondere im oder am Überwachungsbereich (28), befindlichen Kontrollmarkierung auswertet, wobei, wenn die Sicherheitskamera (24) die Kontrollmarkierung nicht detektiert, sie ein Signal an die Produktionsmaschine (12) und / oder ein Warnsignal ausgesendet.

7. Verfahren nach einem der vorhergehenden Patentansprüche, **dadurch gekennzeichnet, dass**
- die Sicherheitskamera (24) die Bilddaten hinsichtlich des Vorhandenseins eines beweglichen Objekts, beispielsweise eines Körperteils (36), in voneinander abgegrenzten Überwachungsbereichen (28) der Umgebung (26) auswertet,
- wobei die Sicherheitskamera (24) bei Detektion des beweglichen Objekts, beispielsweise des Körperteils (36), in einem der Überwachungsbereiche (28) je nach Überwachungsbereich (28) ein für den Überwachungsbereich (28) und / oder eine Art des Überwachungsbereichs (28) spezifisches Signal an die Produktionsmaschine (12) sendet,
- wobei die Produktionsmaschine (12) je nach spezifischem Signal ihren Bewegungsbereich (22) verändert, insbesondere einschränkt und / oder verlegt, und / oder die Bewegung der Produktionsmaschine (12) gestoppt wird.

8. Verfahren nach einem der vorhergehenden Patentansprüche, **dadurch gekennzeichnet, dass** sowohl der Überwachungsbereich (28) als auch der Bewegungsbereich (22) bei Detektion des beweglichen Objekts, beispielsweise des Körperteils (36), im Überwachungsbereich (28) verändert werden.

9. Verfahren nach einem der vorhergehenden Patentansprüche, **dadurch gekennzeichnet, dass** der Überwachungsbereich (28) und / oder der Bewegungsbereich (22) auf einen Ausgangszustand zurückgesetzt wird, wenn das beweglichen Objekt, beispielsweise das Körperteil (36), nicht mehr detektiert wird.

10. Verfahren nach einem der vorhergehenden Patentansprüche, **dadurch gekennzeichnet, dass** wenigstens zwei, insbesondere voneinander beabstandete, bewegliche Objekte, beispielsweise zwei verschiedene Körperteile (36), detektiert werden.

11. Verfahren nach einem der vorhergehenden Patentansprüche, **dadurch gekennzeichnet, dass** das Signal eine Not-Aus-Funktion der Produktionsmaschine (12) auslöst.

12. Verfahren nach einem der vorhergehenden Patentansprüche, **dadurch gekennzeichnet, dass** Positionen und / oder Bewegungen der wenigstens zwei beweglichen Objekte, beispielsweise der zwei Körperteile (36), relativ zu einem gemeinsamen Bezugspunkt, beispielsweise einem übrigen Körper einer Person (34), überwacht werden.

13. Verfahren nach einem der vorhergehenden Patentansprüche, **dadurch gekennzeichnet, dass** zunächst auf eine erste Detektion eines beweglichen Objekts, insbesondere einer Detektion einer Position und / oder einer Bewegung des Körperteils (36), hin die Not-Aus-Funktion ausgelöst wird, und auf eine anschließende zweite Detektion des beweglichen Objekts (36), beispielsweise des Körperteils, und / oder eines anderen beweglichen Objekts (36), beispielsweise eines anderen Körperteils, insbesondere einer Detektion einer anderen Position und / oder einer anderen Bewegung, hin ein Rücksetzsignal zum Rücksetzen der Not-Aus-Funktion an die Produktionsmaschine (12) gesendet wird.

14. Verfahren nach einem der vorhergehenden Patentansprüche, **dadurch gekennzeichnet, dass**, wenn bewegliche Objekte, insbesondere Körperteile (36), mehrerer gesamter beweglicher Objekte, beispielsweise Personen (34), detektiert werden, die Not-Aus-Funktion auf die erste Detektion bei wenigstens einem der gesamten beweglichen Objekte, beispielsweise bei einer der Personen (34), hin ausgelöst wird, und dass das Rücksetzsignal nur auf eine zweite Detektion bei allen gesamten beweglichen Objekten, insbesondere allen Personen (34), hin gesendet wird.

15. Fertigungsanlage (10), umfassend eine Produktionsmaschine (12) und eine Sicherheitskamera (24), wobei die Fertigungsanlage (10) eingerichtet ist, das Verfahren (1000) nach einem der vorhergehenden Patentansprüche zu implementieren.
